# EUROPÄISCHE PATENTSCHRIFT

(11) **EP 2 084 981 B1**
(45) Veröffentlichungstag und Bekanntmachung des Hinweises auf die Patenterteilung: **07.12.2011**
(21) Anmeldenummer: 09001125.5
(22) Anmeldetag: 28.01.2009
(51) Int. Cl.: A43B 9/12, A43B 13/04, A43B 19/00, A43B 23/02, B32B 27/12, B32B 27/40

(54) **Schuh, insbesondere Sportschuh und/oder Freizeitschuh**
Shoe, in particular sport shoe and/or leisure shoe
Chaussure, notamment chaussure de sport et/ou de loisir

(30) Priorität: 29.01.2008 DE 102008006623
(43) Veröffentlichungstag der Anmeldung: 05.08.2009
(73) Patentinhaber: Innovatec Microfibre Technology GmbH & Co.KG, 53840 Troisdorf (DE)
(72) Erfinder: Fischer, Heinz-Jörg, 45481 Mülheim (DE)
(74) Vertreter: Methling, Frank-Oliver

(56) Entgegenhaltungen:
- WO-A-02/04740
- WO-A-2008/087087
- FR-A- 2 554 689
- GB-A- 1 298 460
- GB-A- 2 175 489
- US-A1- 2004 168 348

## Beschreibung

Die Erfindung betrifft einen Schuh, insbesondere Sportschuh und/oder Freizeitschuh und/oder Innenschuh, der eine Laufsohle aufweist, die ganz oder teilweise aus Polyurethan besteht, und der ein Obermaterial aufweist, welches an der Laufsohle befestigt ist.

Derartige Schuhe in Form von Sportschuhen oder Freizeitschuhen sind bekannt. Bei den bekannten Schuhen wird dabei das Obermaterial durch Vernähen oder Verkleben an der Laufsohle befestigt. Da Schuhe, insbesondere Sportschuhe, einer sehr hohen Belastung ausgesetzt sind, führt diese Belastung mit der Zeit dazu, dass die Nähte zwischen Obermaterial und Laufsohle schadhaft werden, was zum einen eine optische Beeinträchtigung des Schuhs zur Folge hat und zum anderen auch zur Unbrauchbarkeit des Schuhs führen kann.

Weiterhin nachteilig ist, dass das bei den bekannten Schuhen vielfach eingesetzte Leder als Obermaterial in Folge der hohen Belastung und der hohen Beanspruchung altert und schadhaft wird, was ebenfalls zu optischen Beeinträchtigungen und letztlich zur Unbrauchbarkeit des Schuhs führt. Ein Schuh mit den Merkmalen des oberbegriffs ist aus GB 2 175 489 bekannt.

Die Aufgabe der Erfindung ist es, Schuhe der eingangs genannten Art derart zu verbessern, dass diese sehr robust sind hinsichtlich starker Beanspruchung, wie dies insbesondere bei Sportschuhen oder Freizeitschuhen der Fall ist, um somit einen Schuh bereit zu stellen, der eine höhere Lebensdauer und Nutzungsdauer aufweist.

Diese Aufgabe wird erfindungsgemäß durch einen Schuh gemäß Anspruch 1 gelöst.

Besonders vorteilhaft ist dabei, dass bei dem erfindungsgemäßen Schuh, bei dem es sich insbesondere um einen Sportschuh und/oder Freizeitschuh handelt, der eine Laufsohle aufweist, die ganz oder teilweise aus Polyurethan besteht, und der ein Obermaterial aufweist, welches an der Laufsohle befestigt ist, dass das Obermaterial des Schuhs aus einem mehrlagigen Verbundmaterial gebildet ist, von dem zumindest eine Lage ganz oder teilweise aus Polyurethan besteht und zumindest eine Lage durch ein mikrofeines, hochdichtes aber wasserdampfdurchlässiges Meltblown gebildet ist.

Unter dem Begriff des Schuhs sind dabei beliebige Formen von Schuhen zu verstehen, d.h. beispielsweise nicht nur geschlossene Schuhe oder Halbschuhe, sondern auch offene oder teilweise offene Schuhe wie Sandalen und dergleichen, aber auch Stiefeletten, Stiefel, etc.

Auch kann es sich um einen Innenschuh, einen so genannten Bootie, handeln. Ein derartiger Innenschuh kann auch gänzlich aus einem mehrlagigen Verbundmaterial gebildet sein, von dem zumindest eine Lage ganz oder teilweise aus Polyurethan besteht und zumindest eine Lage durch ein mikrofeines, hochdichtes aber wasserdampfdurchlässiges Meltblown gebildet ist.

Besonders vorteilhaft ist dabei, dass dieses aus einem mehrlagigen Verbundmaterial gebildete Obermaterial des Schuhs einen geringen Abrieb aufweist, eine geringe Alterung, d.h. eine hohe Lebensdauer und Nutzungsdauer, insbesondere bei Sportschuhen oder Freizeitschuhen, und des Weiteren aufgrund der vorteilhaften Materialeigenschaften eine hohe Biegewechselfestigkeit aufweist. Die aus Polyurethan bestehende Lage bzw. Folie des mehrlagigen Obermaterials des Schuhs ist insbesondere hoch dampfdiffusionsoffen und aus TPU bestehend, insbesondere können hier Spezialtypen von TPU zur Anwendung kommen.

Der Verbund aus TPU-Folie mit TPU-Vliess ist atmungsaktiv, d.h. wasserdicht aber dampfdurchlässig, wodurch vorteilhafte Eigenschaften in dem Obermaterial des Schuhs vereinigt werden, da insbesondere Sportschuhe oder Freizeitschuhe einer hohen Belastung ausgesetzt sind. Dabei sind verschiedene Polyester- bzw. Polyether-Typen einsetzbar.

Das mikrofeine, hochdichte aber wasserdampfdurchlässige Meltblown kann wiederum hydrophil ausgerüstet sein, insbesondere kann die Flüssigkeitsaufnahmefähigkeit ein Vielfaches des eigenen Gewichtes betragen. Hierdurch ist insbesondere eine vorteilhafte Ausgestaltung von Sportschuhen und Freizeitschuhen, die bei hoher Körperanstrengung getragen werden, möglich.

Vorteilhafte Weiterbildungen der Erfindung sind in den Unteransprüchen angegeben.

Vorzugsweise ist die Laufsohle zumindest in dem Bereich, in dem das Obermaterial des Schuhs mit der Laufsohle in Kontakt kommt, ganz oder teilweise aus Polyurethan bestehend.

Vorzugsweise ist das Obermaterial des Schuhs durch Verschweißen der Polyurethanschicht des Obermaterials mit der Laufsohle mit dieser verbunden. Insbesondere kann das Obermaterial des Schuhs durch Ultraschallschweißen oder Hochfrequenzschweißen mit der Laufsohle verbunden werden.

Hierdurch ist eine sehr haltbare Verbindung zwischen Laufsohle und Obermaterial herstellbar, die insbesondere eine hohe Biegewechselfestigkeit aufweist und eine hohe Alterungsbeständigkeit, wodurch der Schuh gegenüber den herkömmlichen Schuhen deutlich haltbarer wird auch bei hoher Beanspruchung, wie dies bei Sportschuhen oder Freizeitschuhen der Fall ist. Auch ist das Herstellen einer Schweißverbindung zwischen Obermaterial und Sohle preiswerter als dies bei dem herkömmlichen Verbindungsvorgang des Vernähens oder Verklebens der Fall ist.

In einer bevorzugten Ausführungsform ist das Obermaterial zumindest teilweise eingefärbt und/oder zumindest teilweise bedruckt und/oder zumindest teilweise transparent.

Vorteilhaft ist es dabei, dass das Obermaterial, welches erfindungsgemäß an dem Schuh vorgesehen ist, einfärbbar ist, d.h. dass verschiedenen Designanforderungen gefolgt werden kann. Alternativ oder kumulativ ist es möglich, dass das Obermaterial bedruckt ist.

Hierdurch können gezielt gestalterische Elemente und verschiedenste Dessins realisiert werden. Auch können spezielle Effekte erzeugt werden, dadurch dass beispielsweise das Obermaterial im Bereich der Schweißnähte transparent ausgeführt ist, wodurch die darunter liegenden Strukturen des Schuhs sichtbar werden. Hierdurch kann gezielt gestalterisch und designtechnisch gewirkt werden. Es können jedoch auch an beliebigen anderen Stellen des Schuhs transparente oder bedruckte oder eingefärbte Abschnitte des Obermaterials vorgesehen sein.

Vorzugsweise ist das Obermaterial des Schuhs durch ein mehrlagiges Verbundmaterial aus zumindest einer Polyurethanschicht, zumindest einer Meltblownschicht und zumindest einer Spinnvliesschicht gebildet. Durch den Aufbau und die Anordnung der verschiedenen Schichten von innen nach außen können dem Schuh somit besonders vorteilhafte Eigenschaften verliehen werden, indem der Schuh durch Einfärben des außenseitigen Materials des Obermaterials designtechnisch gestaltet werden kann, der Schuh wasserdicht, d.h. wasserabweisend ist, jedoch in seinem Inneren beispielsweise Schweiß aufnehmen und zwischenspeichern kann.

In einer bevorzugten Ausführungsform beträgt die Faserstärke einer Spinnvliesschicht des Obermaterials zwischen 6 µm und 25 µm. Es ist möglich, dass das Meltblown auf ein Spinnvliess aufgesprüht ist. Bevorzugt besitzt das Meltblown eine Faserstärke zwischen 0,5 µm und 10 µm.

Durch die entsprechende Auswahl der Faserstärke einer Spinnvliesschicht des Obermaterials und/oder durch eine Auswahl und Festlegung der Faserstärke des Meltblown des Obermaterials ist es möglich den erfindungsgemäßen Schuh hinsichtlich der Eigenschaften des Obermaterials des Schuhs verschiedensten Anforderungen anzupassen, insbesondere können auch weitere Lagen von Verstärkungen vorgesehen sein, wie z.B. Aussteifungen des Schuhs im Fersenbereich.

Der (Außen-) Schuh kann einen Innenschuh aufweisen, wobei der Innenschuh vorzugsweise aus einem mehrlagigen Verbundmaterial gebildet ist, von dem zumindest eine Lage ganz oder teilweise aus Polyurethan besteht und zumindest eine Lage durch ein mikrofeines, hochdichtes aber wasserdampfdurchlässiges Meltblown gebildet ist.

## Patentansprüche

1. Schuh, insbesondere Sportschuh und/oder Freizeitschuh und/oder Innenschuh, der eine Laufsohle aufweist, die ganz oder teilweise aus Polyurethan besteht, und der ein Obermaterial aufweist, welches an der Laufsohle befestigt ist wobei das Obermaterial des Schuhs aus einem mehrlagigen Verbundmaterial gebildet ist, von dem zumindest eine Lage ganz oder teilweise aus Polyurethan besteht und **dadurch gekennzeichnet, dass** zumindest eine Lage durch ein mikrofeines, hochdichtes aber wasserdampfdurchlässiges Meltblown gebildet ist.

2. Schuh nach Anspruch 1, **dadurch gekennzeichnet, dass** die Laufsohle zumindest in dem Bereich, in dem das Obermaterial des Schuhs mit der Laufsohle in Kontakt kommt, ganz oder teilweise aus Polyurethan besteht.

3. Schuh nach Anspruch 1 oder 2, **dadurch gekennzeichnet, dass** das Obermaterial des Schuhs durch Verschweißen der Polyurethanschicht des Obermaterials mit der Laufsohle mit dieser verbunden ist, insbesondere durch Ultraschallschweißen oder Hochfrequenzschweißen.

4. Schuh nach einem der vorherigen Ansprüche, **dadurch gekennzeichnet, dass** das Obermaterial zumindest teilweise eingefärbt und/oder zumindest teilweise bedruckt und/oder zumindest teilweise transparent ist.

5. Schuh nach einem der vorherigen Ansprüche, **dadurch gekennzeichnet, dass** das Obermaterial durch ein mehrlagiges Verbundmaterial aus zumindest einer Polyurethanschicht, zumindest einer Meltblownschicht und zumindest einer Spinnvliesschicht gebildet ist.

6. Schuh nach einem der vorherigen Ansprüche, **dadurch gekennzeichnet, dass** die Faserstärke einer Spinnvliesschicht des Obermaterials zwischen 6 µm und 25 µm beträgt

7. Schuh nach einem der vorherigen Ansprüche, **dadurch gekennzeichnet, dass** das Meltblown auf ein Spinnvlies aufgesprüht ist.

8. Schuh nach einem der vorherigen Ansprüche, **dadurch gekennzeichnet, dass** das Meltblown eine Faserstärke zwischen 0,5 µm und 10 µm besitzt.

9. Schuh nach einem der vorherigen Ansprüche, **dadurch gekennzeichnet, dass** der Schuh einen Innenschuh aufweist, wobei der Innenschuh aus einem mehrlagigen Verbundmaterial gebildet ist, von dem zumindest eine Lage ganz oder teilweise aus Polyurethan besteht und zumindest eine Lage durch ein mikrofeines, hochdichtes aber wasserdampfdurchlässiges Meltblown gebildet ist.

## Claims

1. Shoe, in particular a sports shoe and/or a leisure shoe and/or an inner shoe, which comprises an outsole which consists completely or in part of polyurethane, and which comprises an upper which is fastened to the outsole, the upper of the shoe being formed of a multi-layer composite material of which at least one layer consists completely or in part of polyurethane, **characterised in that** at least one layer is formed by a meltblown which is micro-fine and high-density yet permeable to water vapour.

2. Shoe according to claim 1, **characterised in that** the outsole consists completely or in part of polyurethane, at least in the region in which the upper of the shoe comes into contact with the outsole.

3. Shoe according to either claim 1 or claim 2, **characterised in that** the upper of the shoe is connected to the outsole by welding the polyurethane layer of the upper to said outsole, in particular by ultrasonic welding or high-frequency welding.

4. Shoe according to any one of the preceding claims, **characterised in that** the upper is dyed at least in part and/or printed at least in part and/or transparent at least in part.

5. Shoe according to any one of the preceding claims, **characterised in that** the upper is formed by a multi-layer composite material made of at least one polyurethane layer, at least one meltblown layer and at least one spunbonded fabric layer.

6. Shoe according to any one of the preceding claims, **characterised in that** the fibre thickness of a spunbonded fabric layer of the upper is between 6 µm and 25 µm.

7. Shoe according to any one of the preceding claims, **characterised in that** the meltblown is sprayed onto a spunbonded fabric.

8. Shoe according to any one of the preceding claims, **characterised in that** the meltblown has a fibre thickness of between 0.5 µm and 10 µm.

9. Shoe according to any one of the preceding claims, **characterised in that** the shoe comprises an inner shoe, the inner shoe being formed of a multi-layer composite material of which at least one layer consists completely or in part of polyurethane and at least one layer is formed by a meltblown which is micro-fine and high-density yet permeable to water vapour.

## Revendications

1. Chaussure, en particulier chaussure de sport et/ou chaussure de loisir et/ou chaussure intérieure, qui comporte une semelle d'usure, qui est constituée entièrement ou partiellement de polyuréthanne et qui présente un dessus, qui est fixé sur la semelle d'usure, dans laquelle le dessus de la chaussure est formé d'un matériau composite à plusieurs couches, dont au moins une couche est constituée entièrement ou partiellement de polyuréthanne, et **caractérisée en ce qu'**au moins une couche est formée d'un textile microfin obtenu par extrusion-soufflage très dense, mais perméable à la vapeur d'eau.

2. Chaussure selon la revendication 1, **caractérisée en ce que** la semelle d'usure est constituée entièrement ou partiellement de polyuréthanne au moins dans la zone, dans laquelle le dessus de la chaussure vient en contact avec la semelle d'usure.

3. Chaussure selon la revendication 1 ou 2, **caractérisée en ce que** le dessus de la chaussure est relié par soudage de la couche de polyuréthanne du dessus avec la semelle d'usure à celle-ci, en particulier par soudage aux ultrasons ou par soudage hautes fréquences.

4. Chaussure selon l'une quelconque des revendications précédentes, **caractérisée en ce que** le dessus est teinté au moins partiellement et/ou imprimé au moins partiellement et/ou au moins partiellement transparent.

5. Chaussure selon l'une quelconque des revendications précédentes, **caractérisée en ce que** le dessus est formé d'un matériau composite à plusieurs couches constitué d'au moins une couche de polyuréthanne, d'au moins une couche de textile obtenu par extrusion-soufflage et d'au moins une couche de non-tissé.

6. Chaussure selon l'une quelconque des revendications précédentes, **caractérisée en ce que** l'épaisseur de fibres d'une couche de non-tissé du dessus est comprise entre 6 µm et 25 µm.

7. Chaussure selon l'une quelconque des revendications précédentes, **caractérisée en ce que** le textile obtenu par extrusion-soufflage est pulvérisé sur un non-tissé.

8. Chaussure selon l'une quelconque des revendications précédentes, **caractérisée en ce que** le textile obtenu par extrusion-soufflage possède une épaisseur de fibres comprise entre 0,5 µm et 10 µm.

9. Chaussure selon l'une quelconque des revendications précédentes, **caractérisée en ce que** la chaussure présente une chaussure intérieure, dans laquelle la chaussure intérieure est formée d'un matériau composite à plusieurs couches, dont au moins une couche est constituée entièrement ou partiellement de polyuréthanne et **en ce qu'**au moins une couche est formée d'un textile microfin obtenu par extrusion-soufflage très dense, mais perméable à la vapeur d'eau.
